# EUROPEAN PATENT APPLICATION

(11) **EP 0 983 819 A1**
(43) Date of publication of application: **08.03.2000**
(21) Application number: 98830517.3
(22) Date of filing: 31.08.1998
(51) Int. Cl.: B23K 26/10

(54) **Device for laser cutting of profiled pipes**

(71) Applicant: Gensabella, Walter, 10093 Collegno (TO) (IT)
(72) Inventor: Gensabella, Walter, 10093 Collegno (TO) (IT)
(74) Representative: Robba, Pierpaolo

(57) **Abstract**

Device for laser cutting of draw pipes (4) comprising:
- a supporting bed (2) having guides (18) and a worm screw moving system (19);
- a saddle (1), sliding on guides along a first axis, coupled to the worm screw;
- a rotating system around a second axis, parallel to the first axis, comprising two concentric rings (5, 6), an external ring (5) integral to saddle (1) and an internal ring (6) free to rotate inside the external ring;
- a focusing head (8) for a laser beam, fixed to a support (20) on said internal ring (6), having a first degree of freedom along the focusing axis of the laser beam and a second degree of freedom that permits it to rotate and maintain the laser beam always perpendicular to the surface of the pipe to be cut.

## Description

The present invention refers to an automatic device for cutting pipes from continuous metallic draw pipes, making use of a laser of suitable power.

Automated equipment for cutting pipes from draw pipes are used, in conjunction with automatic welding machines, for assembling tubular structures in robotized conveyers.

Nevertheless usual cutting systems used in this field don't allow to keep up with the growing working speed achieved welding pipes with high power laser systems.

The speed ratio between traditional welding and laser welding is clearly in favour of the latter technology, moreover also the welding quality and the aesthetic aspect, due to the limited thermal zone altered, are better in laser welding.

In many fields, where quality and working speed are very important, the laser welding technology on draw pipes is replacing traditional systems, prejudicing actual manipulation and cutting methods for metallic draw pipes.

In order to take greatest advantage from cutting speed offered by laser technology it is therefore necessary that all the working phases following welding succeed in keeping high working rhythms.

Nevertheless common methods for cutting of draw pipes still provide using of circular saws, belt saws or mechanical shearing systems.

Using these methods, although making use of up-to-date techniques and materials, remain unsolved the problems of cutting slowness and premature wear of tools, especially during manufacturing of stainless steel materials.

Only recently have been developed devices for cutting draw pipes using a power laser beam.

An example of a laser cutting device for draw pipes is described in Italian patent application no. TO96A001019, filed on 13 December 1996 in the name of the same applicant.

The automatic device for cutting of draw pipes described in said application has however some structural defects because it has been designed for cutting pipes having round section. It doesn't allow therefore working of draw pipes having a section different from round, frequently used in industrial production.

A first object of the present invention it is therefore to solve the problem of how to cut pipes from metallic draw pipes of various sections, at a high speed, without particular wears of tools and with a very high cutting quality.

The above and other objects are reached from the laser cutting device for draw pipes according to the present invention, as claimed in the accompanying claims.

The laser cutting device for draw pipes according to the present invention can be advantageously used in conjunction with high speed robotized laser welding plants assuring a high and constant production yield.

The above and other objects of the invention will result more clear from the description of a preferred embodiment with reference to the accompanying drawings in which:
figure 1 shows a partial section lateral view of a laser cutting device for draw pipes according to the present invention;
figure 2 shows a top view of a laser cutting device for draw pipes according to the present invention;
figure 3 shows a partial section front view of a laser cutting device for draw pipes according to the present invention;
figure 4 shows, frontally and laterally, a focusing head of a laser cutting device for draw pipes according to the present invention;
figure 5 shows, frontally and laterally, a rotating support for a focusing head of a laser cutting device for draw pipes according to the present invention; and
figure 6 shows a partial section front view of a second embodiment of a laser cutting device for draw pipes according to the present invention.

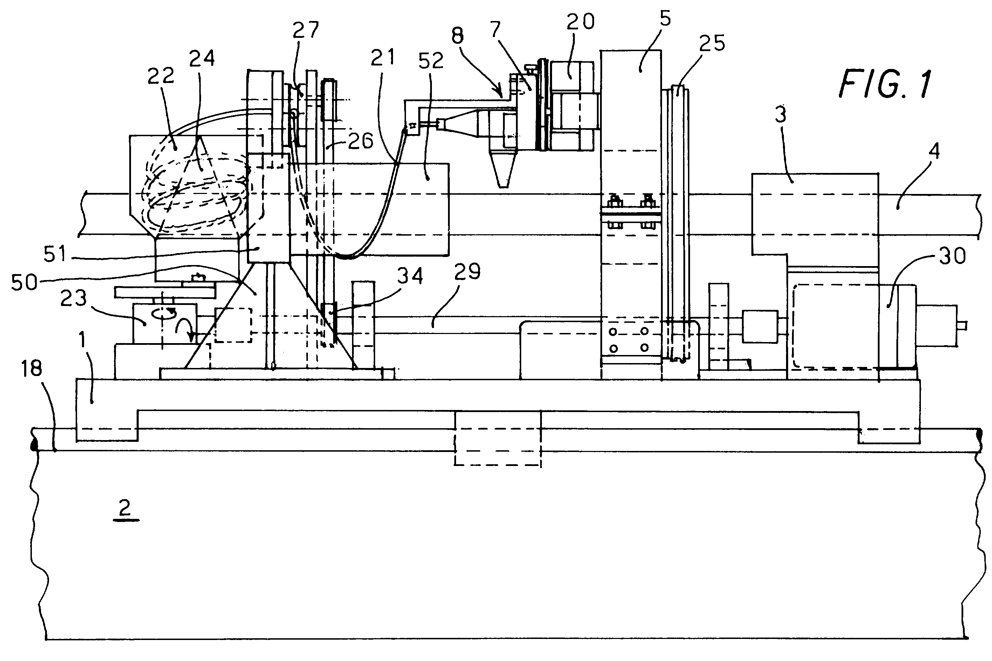

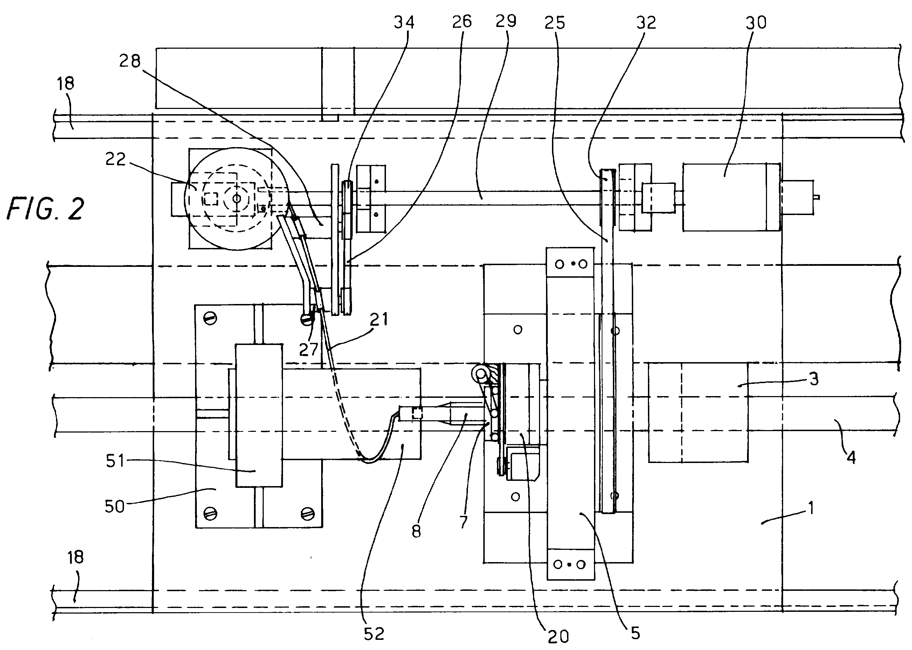

With reference to figures 1, 2 and 3, a laser cutting device for draw pipes comprises a bed 2 with lateral guides 18 on which it is laid a saddle 1.

The bed 2 incorporates a saddle moving system comprising a worm screw 19, placed in central position between guides 18, whose lead nut is fixed to base of saddle 1.

The worm screw 19 is operated by a ratio-motor controlled by an electronic controller of the type CNC/PLC which controls all the cutting device, including the power laser source.

The bed 2 is placed along the sliding axis of a draw pipe 4 coming from a working phase preceding cutting, for example a profile tool, or however an automatic handler.

The saddle 1 has a traverse delimited by the bed's length and its forward motion is synchronised with the translation speed of pipe 4, while reverse motion can be performed at the maximum speed allowed by the system.

Upon saddle 1 is installed a vice 3 with the function of clasping and pressing pipe 4, when, reached the desired length, the cutting phase starts.

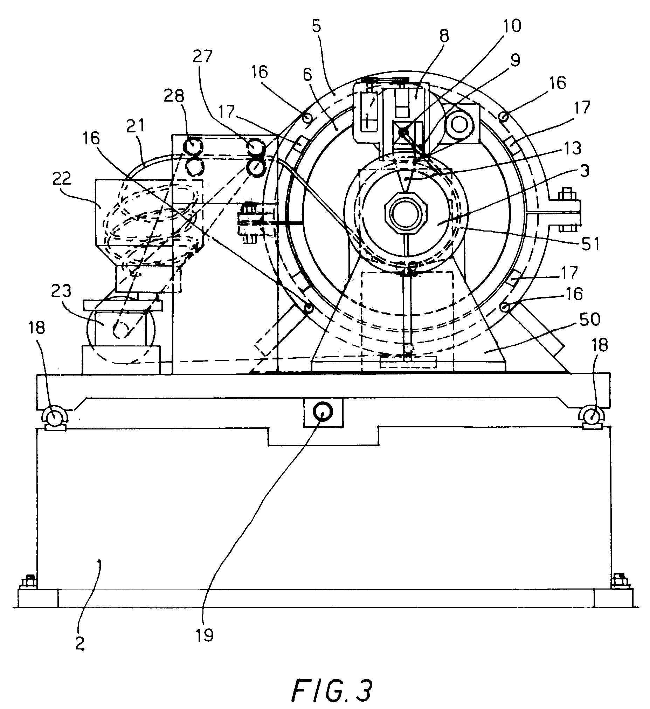

The pipe 4, as visible in detail in the front view of figure 3, passes through two concentric rings, an external fixed one 5 and an internal mobile one 6 able to rotate for an angle grater then 360 degrees.

Sliding of the internal ring 6 as regards the external one 5 is guaranteed by a plurality of rollers 16 and it is laterally retained by a plurality of bearings 17.

The rotational movement of internal ring 6 is sensed by a position coder, or encoder, that transmits a position signal to the electronic controller which controls the system.

It is not necessary that the two rings are manufactured with high precision because an eventual concentricity error of the rings and in the pipe's shape are compensated by the automatic control of the system, as explained below.

On the internal ring 6 is present a support for a focusing head 8 for a laser beam.

The support comprises a first part 20, which allows focusing head 8 to rotate around an axis parallel to the axis of pipe 4, and a second part 7 provided with a slide which allows head 8 to translate along the focusing axis of laser beam.

The combination of these two movements, together with the rotation movement of the internal ring 6 around pipe, permits cutting with accuracy draw pipes having section different from round, for example triangular, squared or rectangular, in that it is possible to maintain the focusing head 8 always perpendicular to the pipe surface.

Each of the two parts 20 and 7 of the support is operated by an electric motor, eventually coupled to a mechanical speed reducer, and controlled by means of encoders coupled to moving parts.

The focusing head 8 is itself motorised with a travel of some tens of millimetres; the combination of this movement with the movement of slide 7 permits to approach with extremely precision the head 8 to the pipe to be cut, also in presence of irregularities or defects.

The focusing head 8 is moreover provided with a capacitive sensor 9 installed on a jet nozzle 13 for a covering gas for the laser beam. The capacitive sensor 9 allows in fact to feedback with extremely precision the position of head 8 as regards to pipe 4 maintaining the distance between head and pipe always constant.

The focusing head 8, which receives the laser beam from a power laser emitting source by means of a fiber optics cable 21, is an optic system comprising a beam expander 11, a focusing lens 12 and a nozzle 13 for adduction of a covering gas, normally nitrogen or oxygen.

The fiber optics cable 21, during rotation of focusing head 8 around pipe 4, wrap itself up the pipe.

In order to facilitate the rotation of the fiber optics cable around the draw pipe 4 it is used an hollow cylinder 52 suspended by one extremity by means of a support 51, provided with bearings, that permits to freely rotate around its axis. The support 51 is fixed to a base 50 integral to the saddle that maintains the hollow cylinder 52 always coaxial with the pipe to be cut.

The fiber optics cable 21 is so guided in the rotation and avoids to touch the high speed moving pipe.

The hollow cylinder 52 can have a conic mouth in order to facilitate entry of the draw pipe.

A sliding system for the fiber optics cable 21 guides going out and re-entering of cable 21 from a collecting basket 22 with a speed equal to the rotating speed of the internal ring 6, which supports the focusing head 8.

In this way the fiber optics cable doesn't suffer for tensile stresses nor deformations and maintains intact its optic and mechanic characteristics.

Advantageously the collecting basket 22 for the optic fibers cable has an eccentric movement 23, synchronised to sliding of cable, that facilitates its going out and re-entering.

The eccentric movement 23 is realised by means of an angular reduction unit and an eccentric mounted on the vertical axis on the basket's base.

The collecting basket 22 has, in its interior, a conic element 24 having its vertex towards high that facilitates further on circular unwinding and winding movements of cable.

The fiber optics cable 21 has a semi-rigid sheath, coupled in its terminal part to the focusing head, that facilitates the formation of a regular spiral around pipe.

The rotation of internal ring 6 which supports the focusing head 8 is performed by means of a toothed belt 25 which connects the ring itself with a pulley 32 keyed on a main driving shaft 29, driven by an electric motor 30.

On the driving shaft 29 it is keyed also a second pulley 34 which drives, by means of a second toothed belt 26, the sliding system for the fiber optics cable.

In this way the rotational movements of the head 8 and the unwinding/winding movements of cable 21 are always performed in synchronism.

The sliding system of the fiber optics cable comprises two couples of shaped rollers 27, 28 which drag the cable and force it to maintain an input angle towards pipe of nearly 15 degrees, facilitating the formation of a regular spiral and allowing an easier and faster re-winding in basket 22.

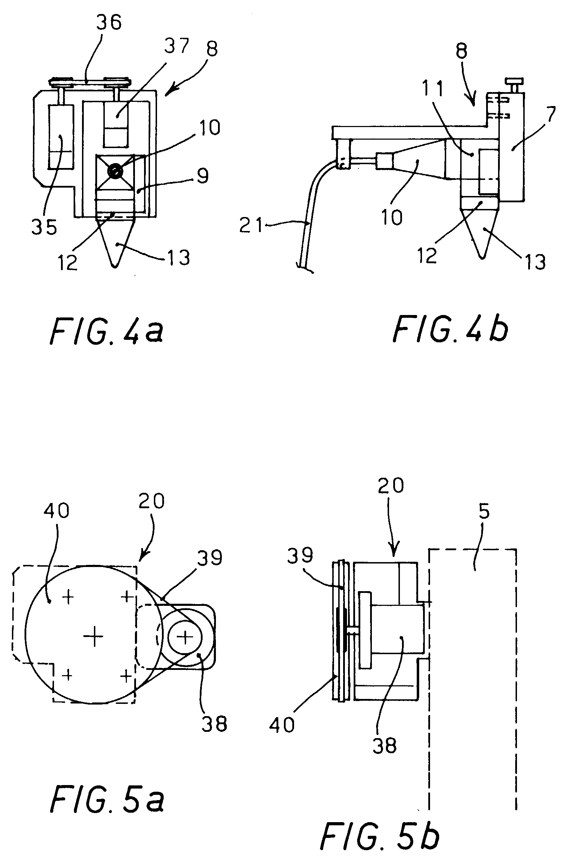

In figures 4a and 4b it is shown in detail a focusing head 8 provided with a motorised slide.

In particular are visible an electric motor 35 which, by means of a belt 36, drives a worm screw slide 37, the coupling of fiber optics cable 10, the beam expander 11, the focusing lens 12, the nozzle 13 and the capacitive sensor 9.

In figures 5a and 5b it is shown in particular the rotating support 20 for the focusing head 8. A rotating part 40, to which it is fixed the focusing head 8, is driven, by means of a belt 39, by an electric motor 38.

Inside the support it is present a position coder, or encoder, not visible in figure, that sends to the main controller information relative to rotating movements of head.

Will now be described operation of above mentioned laser cutting device.

A draw pipe, which outputs for example from a forming machine, enters in the above described system passing through the vice 3 installed on saddle 1.

When the draw pipe reaches a predetermined length, which can be determined automatically by a position sensor, the vice 3 closes on pipe and the saddle starts its movement in the same direction and with the same speed as the pipe.

When the vice 3 is closed starts the approaching movement of the focusing head to the pipe and starts the piercing operation in which the laser beam is energised at a pre-established pulsed power.

The piercing operation can have a variable duration depending from thickness and quality of materials to be cut, usually several seconds.

Finished the piercing operation starts the cutting operation, passing automatically to a proportionate continuous laser power, and starts rotation of focusing head around pipe through an angle greater then 360 degrees.

If pipe's section is not round, during rotation, the electronic controller adjusts continuously the position of head 8 so that it is always perpendicular to the surface to be cut, on the ground of signals coming from sensors and from encoders and following a sequence of operations stored in a memory.

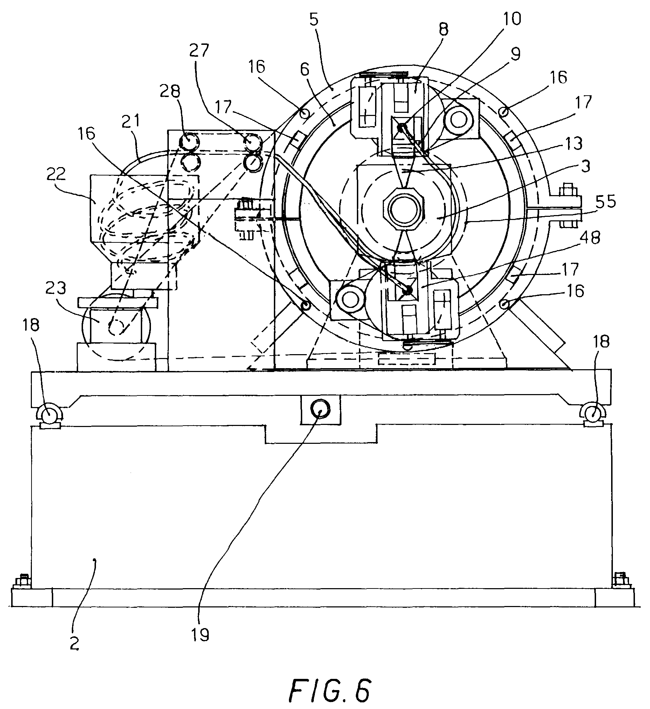

In figure 6 it is shown a second embodiment of the laser cutting device above described.

In particular the device of figure 6 provides a second focusing head 48, for a laser beam coming from a second source, fixed to a second support on the internal ring 6 in a position opposed to the first focusing head 8.

The simultaneous use of two power laser beams allows to halve the rotating angle of internal ring 6 around pipe, from 360 to 180 degrees, doubling consequently the cutting speed.

Moreover it is greatly reduced the mechanic stress suffered by fiber optics cables that connects the focusing heads with the laser sources.

The second focusing head 48 is equivalent, as technical characteristics, to the first focusing head 8 and it is controlled by the same electronic controller.

The angle of incidence on pipe of one head's laser beam must however be always lightly diverging from the other one, so that it is avoided the danger of one laser beam entering in the opposite head.

In figure 6 the hollow cylinder which supports fiber optics cables during rotation, together with its support and base, is shown with reference 55 in dashed line for not covering the second focusing head 48.

Likewise it is possible to provide the cutting device with three or four focusing heads, coupled to corresponding laser sources, in order to triplicate or quadruplicate cutting speed.

In the case of three focusing heads these must be spaced by 120 degrees, while in the case of four focusing heads these should be placed spaced by 90 degrees.

Finished cutting operation the rotating ring 6 returns in initial position, or remains in the reached position travelling back for a subsequent cutting operation, the movements perpendicular to the pipe are withdrawn, the vice 3 opens and the motor moving saddle 1 carries it to the starting point at the maximum speed; the system is therefore ready for a subsequent cutting operation.

The cut pipe must be supported while coming out the system, placing some supporting rollers as near as possible to the cutting zone but however out of the saddle travel.

## Claims

1. Device for laser cutting of draw pipes (4) comprising:
- a supporting bed (2) having guides (18) and a moving system (19);
- a saddle (1), sliding on said guides along a first axis, coupled to the moving system;
- a rotating system around a second axis, parallel to the first axis, comprising two concentric rings (5, 6), an external ring (5) integral to saddle (1) and an internal ring (6) free to rotate inside said external ring;
- a focusing head (8) for a laser beam, fixed to a support (20) on said internal ring (6), having a first degree of freedom along the focusing axis of the laser beam;
- a vice (3), integral to the saddle (1), able to clasp in the centre of the rotating system a draw pipe (4) during cutting;
characterised in that said support (20) for the focusing head (8) can rotate around a third axis, parallel to the second axis, allowing to the focusing head a second degree of freedom that permits it to maintain the laser beam perpendicular to the surface of the pipe to be cut.

2. Device according to claim 1, characterised in that the laser beam is guided from a laser emitting source to the focusing head by means of a fiber optics cable (21) which, during rotation of the focusing head around pipe, spirally winds around the pipe itself.

3. Device according to claim 2, characterised in that it comprises a sliding system for the fiber optics cable which guides going out and re-entering of cable from a collecting basket (22) with a speed equal to the rotating speed of the internal ring (6) that supports the focusing head.

4. Device according to claim 3, characterised in that the collecting basket for the fiber optics cable has an eccentric movement (23), synchronised to sliding of cable, that facilitates its going out and re-entering.

5. Device according to claim 4, characterised in that the collecting basket has inside a conic element (24) having its vertex towards high that facilitates circular unwinding and winding of cable.

6. Device according to claim 2, characterised in that the cable has a semi-rigid sheath, coupled in its terminal part to the focusing head, that facilitates the formation of a regular spiral around pipe.

7. Device according to claim 2, characterised in that it comprises an hollow cylinder (52) suspended by one extremity by means of a support (51) fixed through a base (50) to the saddle (1) and provided with bearings that permits it to freely rotate around its axis, for facilitating rotation of the fiber optics cable (21) around draw pipe (4).

8. Device according to claim 3, characterised in that the saddle (1) comprises a main driving shaft (29) on which are keyed a first pulley (32) which drives, by means of a first belt (25), said internal ring (6) of the rotating system and a second pulley (34) which drives, by means of a second belt (26), said sliding system for the fiber optics cable.

9. Device according to claim 8, characterised in that the eccentric movement of the collecting basket is coupled to said main driving shaft.

10. Device according to claim 3, characterised in that said sliding system for the fiber optics cable comprises two couples of shaped rollers (27, 28) which drag the cable and force it to maintain an input angle towards pipe of nearly 15 degrees.

11. Device according to claim 1, characterised in that said moving system comprises a worm screw (19) driven by speed reducer/motor system and a lead nut fixed to the saddle (1).

12. Device according to claim 1, characterised in that it comprises a second focusing head (48) for a second laser beam, fixed to a second support on said internal ring (6) in a position opposed to said first focusing head (8), having characteristics equivalent to those of the first focusing head (8).

13. Device according to claim 1, characterised in that it comprises a second and a third focusing head for a second and a third laser beam, fixed by means of corresponding supports on said internal ring (6) and distanced between them and from the first focusing head (8) by 120 degrees, having characteristics equivalent to those of the first focusing head (8).

14. Device according to claim 1, characterised in that it comprises a second, a third and a fourth focusing head for corresponding laser beams, fixed by means of corresponding supports on said internal ring (6) and distanced between them and from the first focusing head (8) by 90 degrees, having characteristics equivalent to those of the first focusing head (8).

15. Device according to any of the preceding claims, characterised in that it is controlled by a main electronic controller which controls, on the ground of signals coming from sensors and of operations stored in an internal memory, the moving system of saddle (1), an electric motor coupled to the main rotating shaft (29), the movements of the focusing head, the vice (3) and the laser emitting source.
